# EUROPEAN PATENT SPECIFICATION

(11) **EP 2 562 461 B1**
(45) Date of publication and mention of the grant of the patent: **25.03.2015**
(21) Application number: 12171096.6
(22) Date of filing: 06.06.2012
(51) Int. Cl.: F16M 11/10, F16M 13/00, A47B 87/00, A63H 33/08

(54) **Variable composite support structure for supporting an electronic product**
Variable Verbundträgerstruktur zum Tragen eines elektronischen Produktes
Structure de support composite variable destinée à supporter un produit électronique

(30) Priority: 25.08.2011 CN 201110244941
(43) Date of publication of application: 27.02.2013
(73) Proprietor: Shen, Cheng-Hsien, Tainan City 709 (TW)
(72) Inventor: Shen, Cheng-Hsien, Tainan City 709 (TW)
(74) Representative: Decamps, Alain René François

(56) References cited:
- EP-A1- 2 243 528
- KR-A- 20110 091 619
- US-A- 3 456 413
- US-A- 4 035 977
- US-A- 5 775 046

## Description

### BACKGROUND OF THE INVENTION

### (a) Field of the Invention

The present invention relates to a support structure and, more particularly, to a support structure for supporting an electronic product, such as a tablet PC, a digital photo frame, an electronic book, an electronic screen, a cell phone, an i-pad, an MP3, 4 or 5 and the like.

### (b) Description of the Prior Art

A conventional support seat is used to support an electronic product, such as a tablet PC, a digital photo frame, an electronic book, an electronic screen, a cell phone, an i-pad, an MP3, 4 or 5 and the like, so that the electronic product is supported by the support seat and is placed on a table in an inclined manner so as to facilitate a user operating the electronic product. However, the conventional support seat is only available for a single electronic product and cannot fit another electronic product of different specifications and sizes.

US 4,035,977 A, EP 2 243 528 A1 and US 5,775,046 A describe sets of structural elements, which may be used to form a structure for supporting an electronic device. However, such a structure is complex to form and is instable.

Thus, starting from the state of the art it is the object of the present Invention to provide a simple and stable support structure. This object is solved by the variable composite support structure of claim 1. Advantageous improvements are described by dependent claims.

### BRIEF SUMMARY OF THE INVENTION

In accordance with the present invention, there is provided a support structure, comprising a base, a support block, at least one connecting block, and an extension block. The base has a substantially L-shaped profile and has a longer side and a shorter side. The longer side of the base is provided with a first guide channel and a second guide channel. The support block has an end portion provided with a first guide rail. The support block has a first side provided with a first connecting channel and a second side provided with a side rail. The connecting block has an end portion provided with a second guide rail. The connecting block has a first side provided with a first connecting rail and a second side provided with a second connecting channel. The extension block has an end portion provided with a third guide rail. The extension block has a side provided with a second connecting rail.

The primary objective of the present invention is to provide a variable composite support structure for supporting an electronic product.

According to the primary advantage of the present invention, the base, the support block, the connecting block and the extension block are combined in different manners so that the inclined angle, space and height of the support structure can be adjusted arbitrarily so as to support the electronic product of different specifications and sizes, thereby enhancing the versatility of the support structure, and thereby decreasing the costs of purchase.

Further benefits and advantages of the present invention will become apparent after a careful reading of the detailed description with appropriate reference to the accompanying drawings.

### BRIEF DESCRIPTION OF THE SEVERAL VIEWS OF THE DRAWING(S)

Fig. 1 is a perspective view of a support structure in accordance with the preferred embodiment of the present invention.
Fig. 2 is an exploded perspective view of the support structure as shown in Fig. 1.
Fig. 3 is a perspective view of a support structure in accordance with another preferred embodiment of the present invention.
Fig. 4 is a schematic operational view of the support structure for an electronic product as shown in Fig. 1.
Fig. 5 is a schematic operational view of the support structure for an electronic product as shown in Fig. 4 in use.
Fig. 6 is a perspective operational view of the support structure for an electronic product in accordance with another preferred embodiment of the present invention.
Fig. 7 is a perspective operational view of the support structure for an electronic product in accordance with another preferred embodiment of the present invention.
Fig. 8 is a perspective operational view of the support structure for an electronic product in accordance with another preferred embodiment of the present invention.
Fig. 9 is a perspective operational view of the support structure for an electronic product in accordance with another preferred embodiment of the present invention.
Fig. 10 is a perspective view of a base of the support structure in accordance with another preferred embodiment of the present invention.
Fig. 11 is a perspective view of a base of the support structure in accordance with another preferred embodiment of the present invention.
Fig. 12 is an exploded perspective view of a base of the support structure in accordance with another preferred embodiment of the present invention.
Fig. 13 is a partially front exploded view of a rail and a channel of the support structure in accordance with another preferred embodiment of the present invention.
Fig. 14 is a front assembly view of the rail and the channel of the support structure as shown in Fig. 13.
Fig. 15 is a partially front exploded view of a rail and a channel of the support structure in accordance with another preferred embodiment of the present invention.
Fig. 16 is a front assembly view of the rail and the channel of the support structure as shown in Fig. 15.

### DETAILED DESCRIPTION OF THE INVENTION

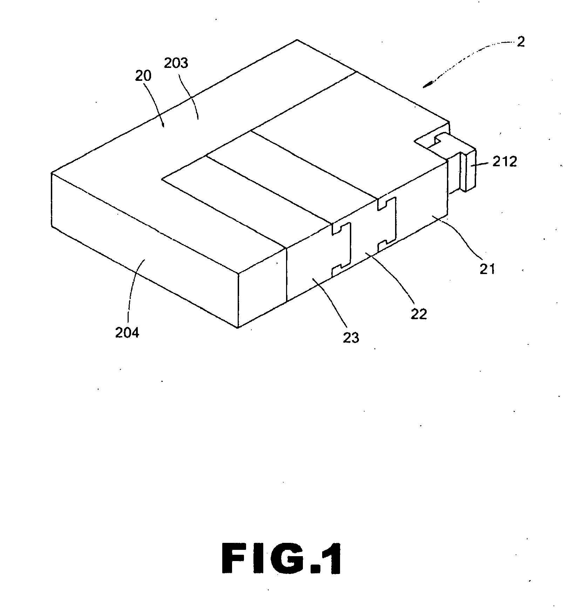

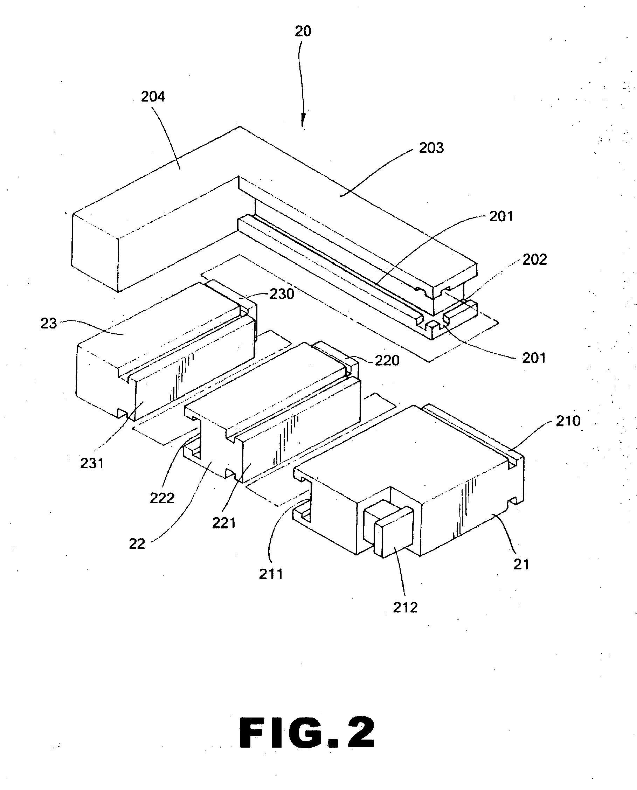

Referring to the drawings and initially to Figs. 1 and 2, a support structure 2 in accordance with the preferred embodiment of the present invention comprises a base 20, a support block 21, at least one connecting block 22, and an extension block 23.

The base 20 is made of a flexible material and has an anti-slip function. The base 20 has a substantially L-shaped profile and has a longer side 203 and a shorter side 204. The longer side 203 of the base 20 is provided with a first guide channel 201 and a second guide channel 202. The second guide channel 202 of the base 20 is perpendicular to the first guide channel 201 of the base 20. The second guide channel 202 of the base 20 has a length smaller than that of the first guide channel 201 of the base 20.

The support block 21 is made of a flexible material and has an anti-slip function. The support block 21 has an end portion provided with a first guide rail 210. The support block 21 has a first side provided with a first connecting channel 211 and a second side provided with a side rail 212. The first guide rail 210 of the support block 21 is perpendicular to the first connecting channel 211 of the support block 21 and perpendicular to the side rail 212 of the support block 21.

The connecting block 22 is made of a flexible material and has an anti-slip function. The connecting block 22 has an end portion provided with a second guide rail 220. The connecting block 22 has a first side provided with a first connecting rail 221 and a second side provided with a second connecting channel 222. The second guide rail 220 of the connecting block 22 is perpendicular to the first connecting rail 221 of the connecting block 22 and perpendicular to the second connecting channel 222 of the connecting block 22.

The extension block 23 is made of a flexible material and has an anti-slip function. The extension block 23 has an end portion provided with a third guide rail 230. The extension block 23 has a side provided with a second connecting rail 231. The third guide rail 230 of the extension block 23 is perpendicular to the second connecting rail 231 of the extension block 23.

In assembly, the first connecting rail 221 of the connecting block 22 is inserted into the first connecting channel 211 of the support block 21 so that the connecting block 22 is combined with the support block 21, and the second guide rail 220 of the connecting block 22 is parallel with the first guide rail 210 of the support block 21. Then, the second connecting rail 231 of the extension block 23 is inserted into the second connecting channel 222 of the connecting block 22 so that the extension block 23 is combined with the connecting block 22, and the third guide rail 230 of the extension block 23 is parallel with the second guide rail 220 of the connecting block 22. Thus, the support block 21, the connecting block 22 and the extension block 23 are combined together and are disposed at a transverse state. Then, the third guide rail 230 of the extension block 23, the second guide rail 220 of the connecting block 22 and the first guide rail 210 of the support block 21 are in turn inserted into the first guide channel 201 of the base 20, so that the base 20, the support block 21, the connecting block 22 and the extension block 23 are combined together and are disposed at a transverse state, and the support structure 2 forms a rectangular block. Preferably, the support structure 2 comprises a plurality of connecting blocks 22 which are connected with each other to extend the support structure 2.

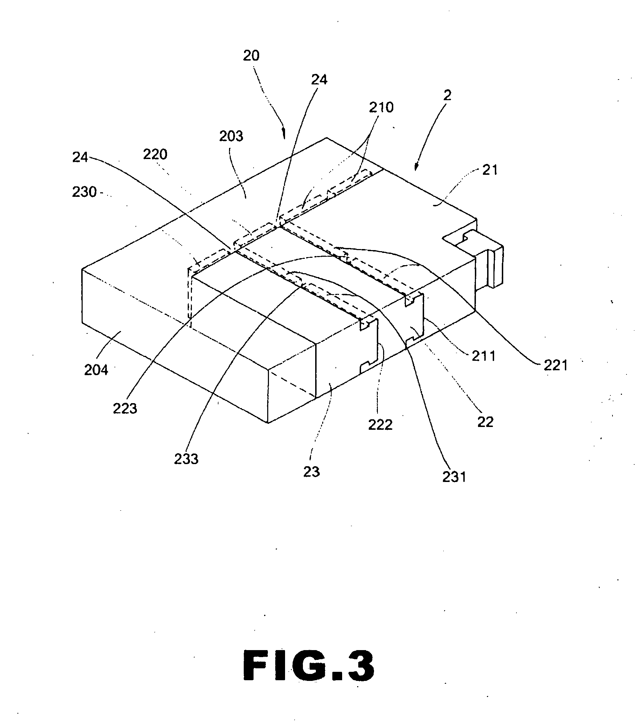

Referring to Fig. 3 with reference to Fig. 2, the first guide rail 210 of the support block 21 has a length smaller than a width of the support block 21, the second guide rail 220 of the connecting block 22 has a length smaller than a width of the connecting block 22, and the third guide rail 230 of the extension block 23 has a length smaller than a width of the extension block 23, so that a gap 24 is defined between the first guide rail 210 of the support block 21 and the second guide rail 220 of the connecting block 22 and is defined between the second guide rail 220 of the connecting block 22 and the third guide rail 230 of the extension block 23 to facilitate sliding of the first guide rail 210 of the support block 21, the second guide rail 220 of the connecting block 22 and the third guide rail 230 of the extension block 23. In addition, the first connecting rail 221 of the connecting block 22 has a side provided with a clearance 223 to facilitate sliding of the first connecting rail 221 of the connecting block 22, and the second connecting rail 231 of the extension block 23 has a side provided with a clearance 233 to facilitate sliding of the second connecting rail 231 of the extension block 23.

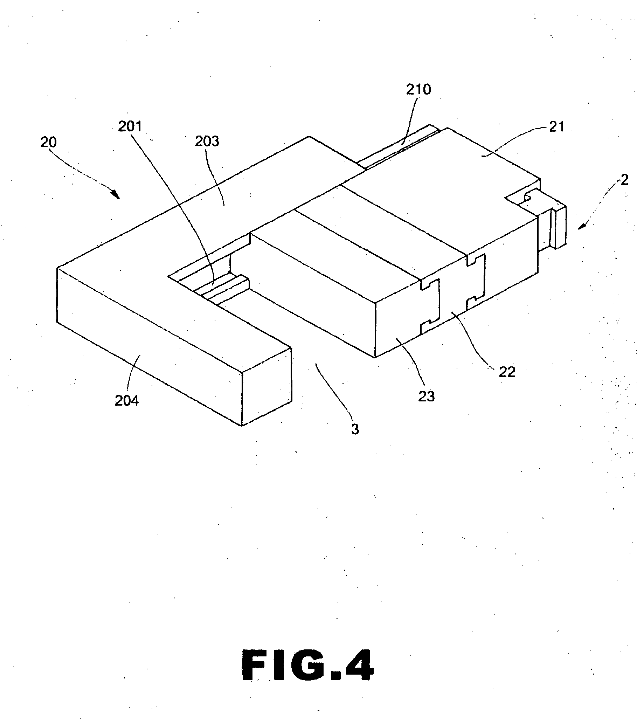

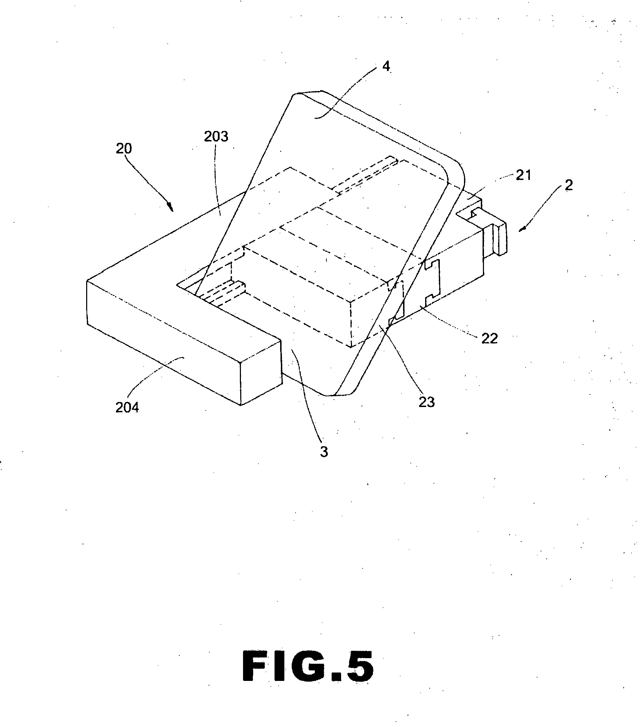

Referring to Figs. 4 and 5 with reference to Fig. 2, the support block 21, the connecting block 22 and the extension block 23 are movable relative to the base 20 so that a space 3 is defined between the shorter side 204 of the base 20 and the extension block 23. Thus, an electronic product 4, such as a tablet PC, a digital photo frame, an electronic book, an electronic screen, a cell phone, an i-pad, an MP3, 4 or 5 and the like, is placed in the space 3 and is supported between the shorter side 204 of the base 20 and the extension block 23 in an inclined manner. At this time, the support block 21, the connecting block 22 and the extension block 23 are movable relative to the base 20 to adjust the inclined angle of the electronic product 4.

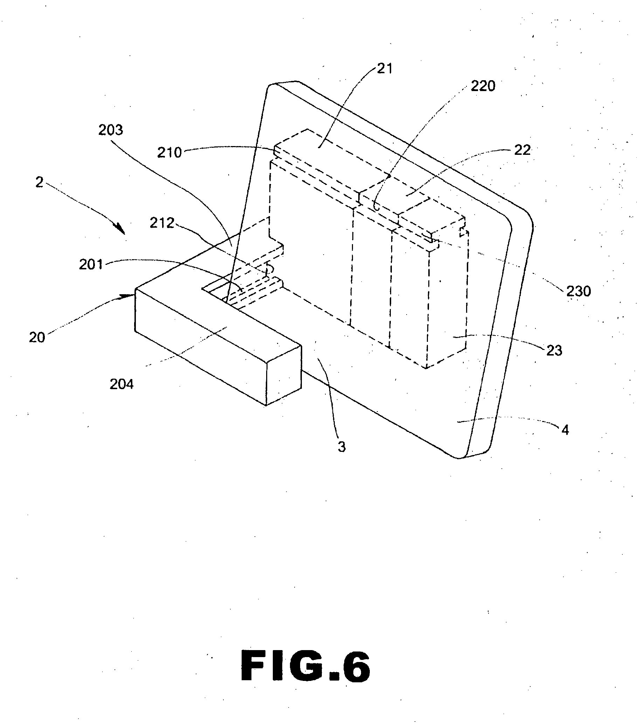

Referring to Fig. 6 with reference to Fig. 2, the support block 21, the connecting block 22 and the extension block 23 are combined together and are disposed at an upright state. Then, the side rail 212 of the support block 21 is inserted into the first guide channel 201 of the base 20. Then, the side rail 212 of the support block 21 is movable relative to the base 20 so that a space 3 is defined between the shorter side 204 of the base 20 and the support block 21, the connecting block 22 and the extension block 23. Thus, the electronic product 4 is placed in the space 3 and is supported between the shorter side 204 of the base 20 and the support block 21, the connecting block 22 and the extension block 23 in an inclined manner. At this time, the side rail 212 of the support block 21 is movable relative to the base 20 to adjust the inclined angle of the electronic product 4.

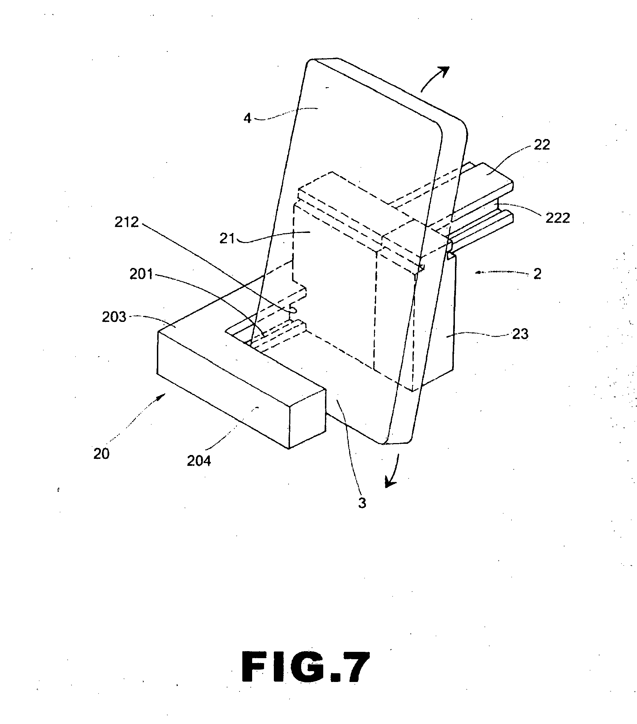

Referring to Fig. 7 with reference to Fig. 2, the second connecting rail 231 of the extension block 23 is inserted into the first connecting channel 211 of the support block 21. Thus, the support block 21 and the extension block 23 are combined together and are disposed at an upright state. Then, the side rail 212 of the support block 21 is inserted into the first guide channel 201 of the base 20. Then, the side rail 212 of the support block 21 is movable relative to the base 20 so that a space 3 is defined between the shorter side 204 of the base 20 and the support block 21. Thus, the electronic product 4 is placed in the space 3 and is supported between the shorter side 204 of the base 20 and the support block 21 in an inclined manner. At this time, the side rail 212 of the support block 21 is movable relative to the base 20 to adjust the inclined angle of the electronic product 4. Preferably, the second guide rail 220 of the connecting block 22 is inserted into the second guide channel 202 of the base 20 so that the connecting block 22 is in line with the longer side 203 of the base 20 to extend the base 20.

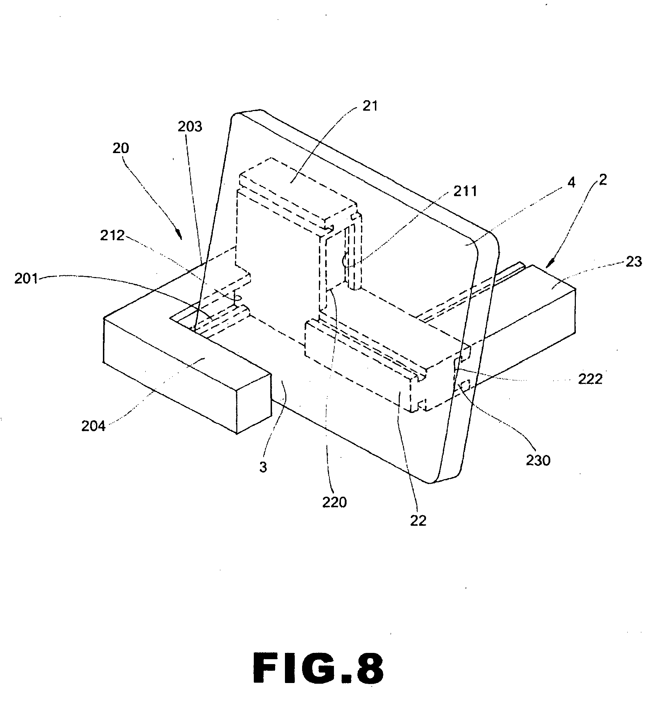

Referring to Fig. 8 with reference to Fig. 2, the side rail 212 of the support block 21 is inserted into the first guide channel 201 of the base 20. Then, the second guide rail 220 of the connecting block 22 is inserted into the first connecting channel 211 of the support block 21. Then, the third guide rail 230 of the extension block 23 is inserted into the second connecting channel 222 of the connecting block 22. Thus, the support block 21 is disposed at an upright state, the connecting block 22 is disposed at a transverse state, and the extension block 23 is disposed at a transverse state and is parallel with the longer side 203 of the base 20 to extend the base 20.

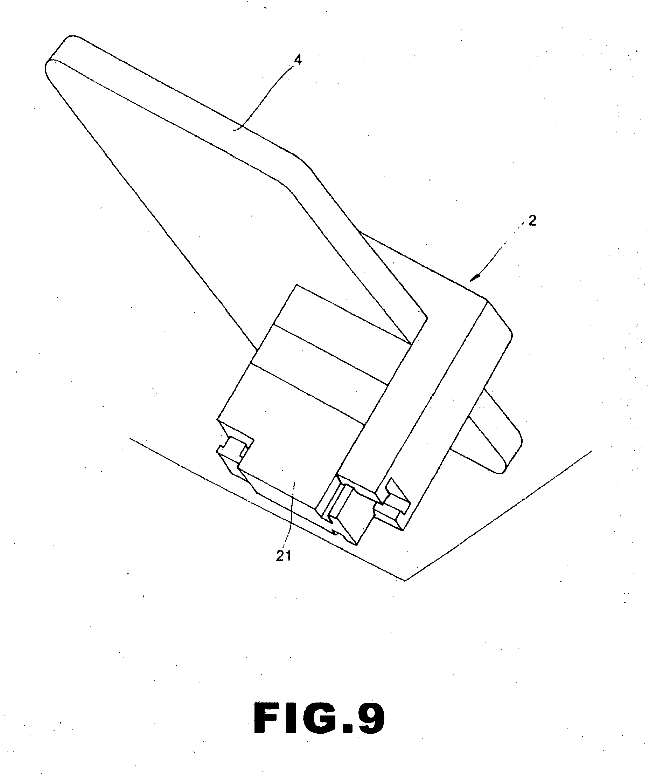

Referring to Fig. 9 with reference to Fig. 2, the electronic product 4 is clamped by the support structure 2, and is inclined with the support block 21 of the support structure 2 so that the electronic product 4 and the support block 21 of the support structure 2 for two fulcrums. Thus, the electronic product 4 and the support block 21 of the support structure 2 are placed on a table.

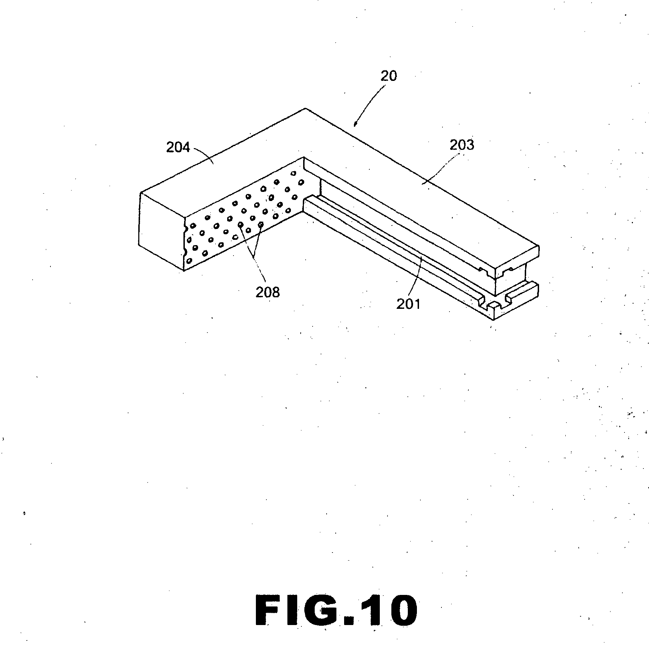

Referring to Fig. 10, the shorter side 204 of the base 20 has a side provided with a plurality of particles 208 to enhance the friction of the base 20.

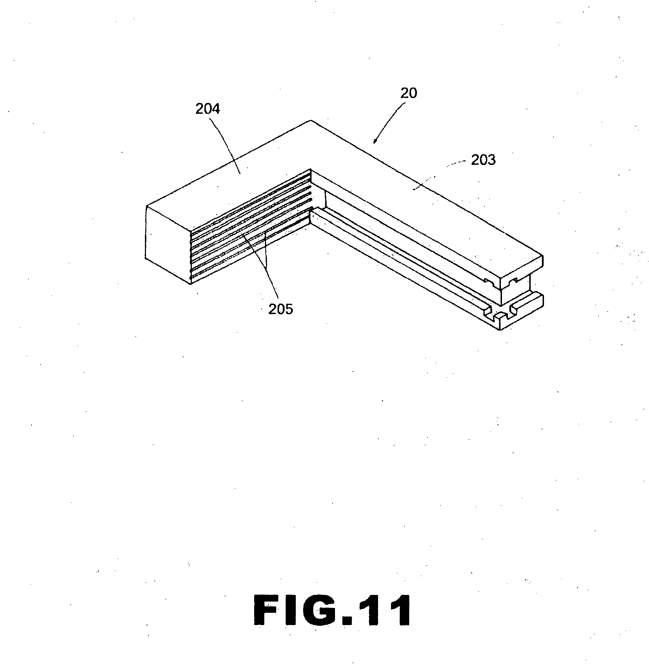

Referring to Fig. 11, the shorter side 204 of the base 20 has a side provided with a plurality of elongate ribs 205 to enhance the friction of the base 20.

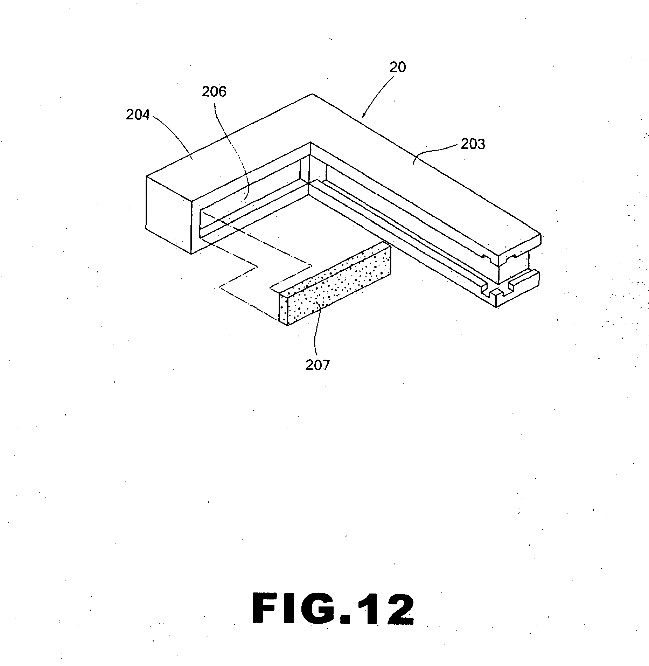

Referring to Fig. 12, the shorter side 204 of the base 20 has a side provided with an elongate slot 206 to receive an elongate anti-skid pad 207 so as to provide an anti-skid function.

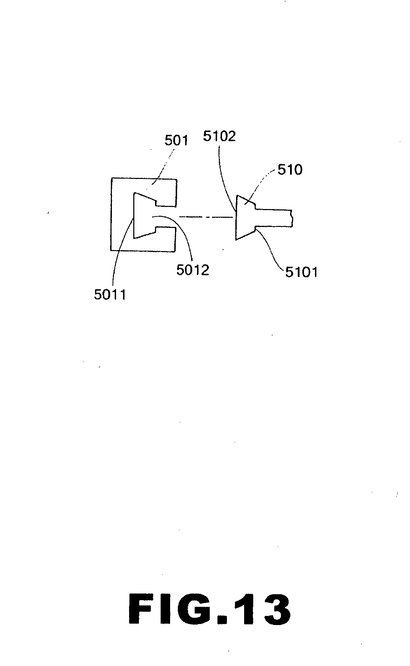

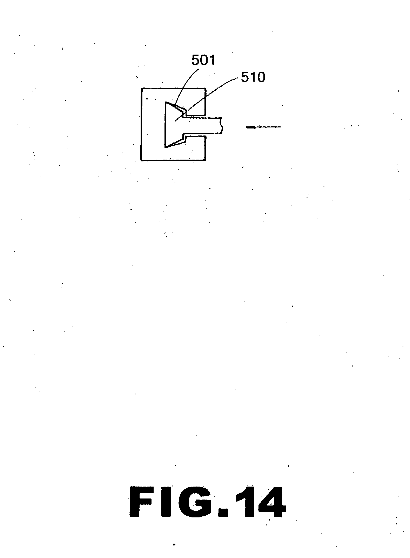

Referring to Figs. 13 and 14 with reference to Fig. 2, the channel 501 has an inner side 5011 and an outer side 5012, and has a width decreased gradually from the inner side 5011 to the outer side 5012 thereof. The rail 510 has an inner side 5101 and an outer side 5102, and has a thickness increased gradually from the inner side 5101 to the outer side 5102 thereof. In addition, the channel 501 has a size greater than that of the rail 510. It is appreciated that, the channel 501 includes the first guide channel 201, the second guide channel 202, the first connecting channel 211 and the second connecting channel 222, and the rail 510 includes the first guide rail 210, the side rail 212, the second guide rail 220, the first connecting rail 221, the third guide rail 230 and the second connecting rail 231.

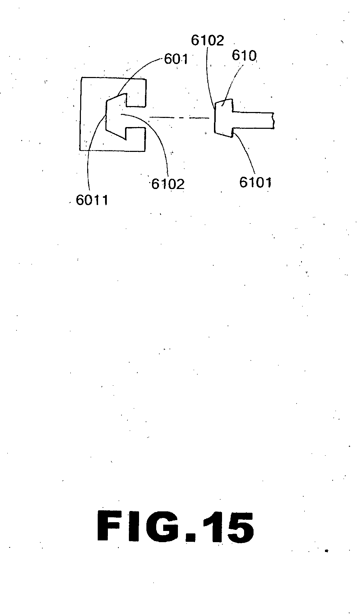

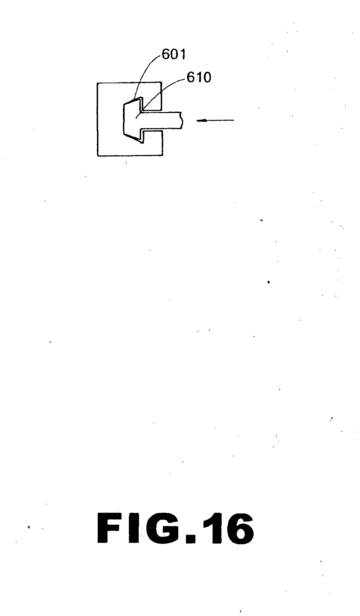

Referring to Figs. 15 and 16 with reference to Fig. 2, the channel 601 has an inner side 6011 and an outer side 6012, and has a width increased gradually from the inner side 6011 to the outer side 6012 thereof. The rail 610 has an inner side 6101 and an outer side 6102, and has a thickness decreased gradually from the inner side 6101 to the outer side 6102 thereof. In addition, the channel 601 has a size greater than that of the rail 610.

Accordingly, the base 20, the support block 21, the connecting block 22 and the extension block 23 are combined in different manners so that the inclined angle, space and height of the support structure 2 can be adjusted arbitrarily so as to support the electronic product 4 of different specifications and sizes, thereby enhancing the versatility of the support structure 2, and thereby decreasing the costs of purchase.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A variable composite support structure for supporting an electronic product, comprising:
a base (20), having a flexible block and is anti-slip, and an inner side of a longer side of the base (20) is provided with a first guide channel (201), such that a location close to an end portion of the first guide channel (201) is provided with a second guide channel (202) that is perpendicular to the first guide channel (201);
a support block (21), which is flexible and anti-slip, an end portion of the support block (21) is provided with a first guide rail (210), and an adjacent end of the support block (21) is formed with a first connecting channel (211), such that a bottom of a corresponding end portion of the first connecting channel (211) is provided with a side rail (212);
a connecting block (22), which is flexible and anti-slip, an end portion of the connecting block (22) is provided with a second guide rail (220), and an adjacent end portion of the connecting block (22) is formed with a second connecting channel (222), such that a corresponding end portion of the second connecting channel (222) is extended with a first connecting rail (221); and
an extension block (23), which is flexible and anti-slip and two adjacent ends of the extension block (23) are provided with a second connecting rail (230), (231), respectively;
wherein the base (20), the support block (21), the connecting block (22) and the extension block (23), are combined and configured to slide freely the rails (210), (212), (220), (221), (230), (231) of the support block (21), the connecting block (22) and the extension block (23) in the guide channels (201), (202) of the base (20), such that a gap between the base (20) and the support block (21), the connecting block (22) and the extension block (23) is adjustable, and an inclined angle for clamping an object is controllable; are combined, **characterised in that** the base is a substantially L-shaped block.

2. The variable composite support structure for supporting an electronic product, according to claim 1, wherein the guide channels (201), (202) of the base (20) with the rails (210), (212), (220), (221), (230), (231) of the support block (21), the connecting block (22) and the extension block (23), results in use in different kinds of changes of combination, thus providing for application of electronic products of different kinds of specifications.

3. The variable composite support structure for supporting an electronic product, according to claim 1, wherein in use the support block (21) is put upright, the rails (210), (212) of the support block (21) is slidingly inserted into the guide channels (201), (202) of the base (20), and the channel (222) of the connecting block 22 being slidingly connected with the rails (210), (212), (230), (231) of the support block (21) and the extension block (23).

4. The variable composite support structure for supporting an electronic product, according to claim 1, wherein in use the base (20) is connected and used respectively with the support block (21), the connecting block (22) and the extension block (23).

5. The variable composite support structure for supporting an electronic product, according to claim 1, wherein there is more than one connecting block (22).

6. The variable composite support structure for supporting an electronic product, according to claim 1, wherein the rails (210), (212), (220), (221), (230), (231) of the support block (21), the connecting block (22) and the extension block (23), as well as the guide channels (201), (202) of the base (20), are formed with gaps (24).

7. The variable composite support structure for supporting an electronic product, according to claim 1, wherein the rails (210), (212), (220), (221), (230), (231) of the support block (21), the connecting block (22) and the extension block (23) are opened with clearances (223).

8. The variable composite support structure for supporting an electronic product, according to claim 1, wherein adjacent surfaces of the guide channels (201), (202) of the base (20) are provided with particles or ribs.

9. The variable composite support structure for supporting an electronic product, according to claim 1, wherein the channels (201), (202), (211), (222) of the base (20), the support block (21) and the connecting block (22) are designed as having a width decreased gradually from an inner side to an outer side or having a width increased gradually from the inner side to the outer side; whereas, the support block (21), the connecting block (22) and the extension block (23) are designed correspondingly as having a width increased gradually from the inner side to the outer side or having a width decreased gradually from the inner side to the outer side.

## Patentansprüche

1. Eine Verbund-Trägerstruktur zum Halten eines elektronischen Produkts, umfassend:
Eine Grundplatte (20), die über einen flexiblen Baustein verfügt und rutschfest ist und eine Innenseite einer längeren Seite der Grundplatte (20) ist mit einer ersten Führungsrinne (201) versehen, so dass eine Stelle nahe einem Endstück der ersten Führungsrinne (201) mit einer zweiten Führungsrinne (202) versehen ist, die im rechten Winkel zur ersten Führungsrinne (201) liegt;
ein stützender Baustein (21), der flexibel und rutschfest ist, ein Endstück des stützenden Bausteins (21) ist mit einer ersten Führungsschiene (210) versehen und ein angrenzendes Ende des stützenden Bausteins (21) wird mit einer ersten Verbindungsrinne (211) gebildet, so dass eine Unterkante eines entsprechenden Endstücks der ersten Verbindungsrinne (211) mit einer Seitenschiene (212) versehen ist;
ein Verbindungsbaustein (22) der flexibel und rutschfest ist, ein Endstück des Verbindungsbausteins (22) ist mit einer zweiten Führungsschiene (220) versehen und ein angrenzendes Endstück des Verbindungsbausteins (22) ist mit einer zweiten Verbindungsrinne (222) gebildet, so dass ein entsprechendes Endstück der zweiten Verbindungsrinne (222) mit einer ersten Verbindungsschiene (221) verlängert wird;
und ein Verlängerungsbaustein (23), der flexibel und rutschfest ist und zwei angrenzende Enden des Verlängerungsblocks (23) sind mit einer zweiten Verbindungsschiene, jeweils (230), (231) versehen;
wobei die Grundplatte (20), der stützende Baustein (21), der Verbindungsbaustein (22) und der Verlängerungsbaustein (23) kombiniert sind und so konfiguriert sind, dass sie frei auf den Schienen (210), (212), (220), (221), (230), (231) des stützenden Bausteins (21), des Verbindungsbausteins (22) und des Verlängerungsbausteins (23) in den Führungsrinnen (201), (202) der Grundplatte (20) gleiten, so dass ein Abstand zwischen der Grundplatte (20) und dem stützenden Baustein (21), dem Verbindungs-baustein (22) und dem Verlängerungsbaustein (23) verstellt werden kann, und ein Neigungswinkel zum Einspannen eines Gegenstands kontrolliert werden kann;
**gekennzeichnet dadurch**, dass die Grundplatte im Wesentlichen ein L-förmiger Baustein ist.

2. Die veränderliche Verbund-Trägerstruktur zum Halten eines elektronischen Produkts gemäß dem Anspruch 1, wobei die Führungsrinnen (201), (202) der Grundplatte (20) mit den Schienen (210), (212), (220), (221), (230), )231) des stützenden Bausteins (21), des Verbindungsbausteins (22) und des Verlängerungsbausteins (23) zur Nutzung von Kombinationsänderungen führt und somit die Verwendung von elektronischen Produkten mit unterschiedlichen Spezifikationen ermöglicht.

3. Die veränderliche Verbund-Trägerstruktur zum Halten eines elektronischen Produkts gemäß dem Anspruch 1, wobei der stützende Baustein (21) bei der Verwendung aufrecht gestellt wird, die Schienen (210), (212), des stützenden Bausteins (21) werden in die Führungsrinnen (201), (202) der Grundplatte (20) eingeschoben, und die Rinne (222) des Verbindungsbausteins 22 werden gleitend mit den Schienen (210), (212), (230), (231), des stützenden Bausteins (21) des Verlängerungsbausteins (23) verbunden.

4. Die veränderliche Verbund-Trägerstruktur zum Halten eines elektronischen Produkts gemäß dem Anspruch 1, wobei die Grundplatte (20) bei der Verwendung mit dem stützenden Baustein (21), dem Verbindungsbaustein (22) und dem Verlängerungsbaustein (23) verbunden bzw. verwendet wird.

5. Die veränderliche Verbund-Trägerstruktur zum Halten eines elektronischen Produkts gemäß dem Anspruch 1, wobei mehr als ein Verbindungsbaustein (22) vorhanden ist.

6. Die veränderliche Verbund-Trägerstruktur zum Halten eines elektronischen Produkts gemäß dem Anspruch 1, wobei die Schienen (210), (212), (220), (221), (230), (231) des stützenden Bausteins (21), des Verbindungsbausteins (22) und des Verlängerungsbausteins (23) sowie die Führungsrinnen ((201), (202) der Grundplatte (20) mit Abständen (24) gebildet sind.

7. Die veränderliche Verbund-Trägerstruktur zum Halten eines elektronischen Produkts gemäß dem Anspruch 1, wobei die Schienen (210), (212), (220), (221), (230), (231) des stützenden Bausteins (21), des Verbindungsbausteins (22) und des Verlängerungsbausteins (23) mit Abständen (223) geöffnet werden.

8. Die veränderliche Verbund-Trägerstruktur zum Halten eines elektronischen Produkts gemäß dem Anspruch 1, wobei angrenzende Flächen der Führungsrinnen (201), (202) der Grundplatte (20) mit Partikeln oder Rippen versehen sind.

9. Die veränderliche Verbund-Trägerstruktur zum Halten eines elektronischen Produkts gemäß dem Anspruch 1, wobei die Rinnen (201), (202), (211), (222) der Grundplatte (20), des stützenden Bausteins (21) und des Verbindungsbausteins (22) so gestaltet sind, dass sich die Breite nach und nach von einer Innenseite zu einer Außenseite verringert oder die Breite nach und nach von der Innenseite zur Außenseite vergrößert; wobei der stützende Baustein (21), der Verbindungsbaustein (22) und der Verlängerungsbaustein (23) entsprechend so gestaltet sind, dass die Breite sich nach und nach von der Innenseite zur Außenseite vergrößert oder dass sich die Breite nach und nach von der Innenseite zur Außenseite verringert.

## Revendications

1. Une structure de support composite variable destinée à maintenir un appareil électronique, comprenant :
Une base (20), équipée d'un bloc flexible et antidérapant, une paroi intérieure du côté le plus long de la base (20) pourvue d'un premier canal de guidage (201), positionné de manière à ce que l'extrémité du premier canal de guidage (201) soit relié à un second canal de guidage (202) perpendiculaire au premier (201) ;
Un bloc de support (21), souple et antidérapant, dont l'extrémité (21) est pourvue d'un premier canal de guidage (210), et dont l'extrémité adjacente (21) est liée par un premier canal de liaison (211), dont le fond de l'extrémité est muni d'un rail latéral (212) ;
Un bloc de raccordement (22), souple et antidérapant, dont l'extrémité (22) est munie d'un deuxième rail de guidage (220), et dont l'extrémité adjacente au bloc de connexion (22) est liée par un deuxième canal de liaison (222), positionné de manière à ce que l'extrémité du second canal de liaison (222) soit connectée au premier rail de liaison (221) ; et un bloc d'extension (23), souple et antidérapant dont les deux extrémités adjacentes (23) sont pourvues d'un deuxième rail de liaison, respectivement (230), (231) ;
À la base (20), le bloc de support (21), le bloc de raccordement (22) et le bloc d'extension (23), sont réunis et positionnés de manière à coulisser librement dans les rails (210), (212), (220), (221), (230), (231) du bloc de support (21), du bloc de raccordement (22) et du bloc d'extension (23) des canaux de guidage (201), (202) de la base (20), de sorte qu'un interstice entre la base (20), le bloc de support (21), le bloc de raccordement (22) et le bloc d'extension (23) soit réglable, et qu'un angle d'inclinaison puisse être réglé de façon à serrer l'appareil. La base est **caractérisée par** sa forme en L.

2. La structure de support composite variable permettant de maintenir un appareil électronique, tel que décrite au paragraphe 1, contient les canaux de guidage (201), (202) de la base (20) et les rails (210), (212), (220), (221), (230), (231) du bloc de support (21), du bloc de raccordement (22) et du bloc d'extension (23), et permet d'utiliser plusieurs types de combinaisons et donc plusieurs types de produits électroniques, aux caractéristiques spécifiques.

3. La structure de support composite variable permettant de maintenir un appareil électronique, tel que décrite au paragraphe 1, dans laquelle, lors de l'utilisation, le bloc de support (21) est mis en position verticale, contient les rails (210), (212) du bloc de support (21) qui sont coulissants et insérés dans le les canaux de guidage (201), (202) de la base (20), et le canal (222) du bloc de connexion 22 qui est coulissant et inséré dans les rails (210), (212), (230), (231) du bloc de support (21) et du bloc d'extension (23).

4. La structure de support composite variable permettant de maintenir un appareil électronique, tel que décrite au paragraphe 1, contient une base qui, en cours d'utilisation (20) est raccordée et utilisée en connexion avec le bloc de support (21), le bloc de raccordement (22) et le bloc d'extension (23).

5. La structure de support composite variable permettant de maintenir un appareil électronique, tel que décrite au paragraphe 1, contient plusieurs blocs de liaison (22).

6. La structure de support composite variable permettant de maintenir un appareil électronique, tel que décrite au paragraphe 1, contient les rails (210), (212), (220), (221), (230), (231) du bloc de support (21), du bloc de raccordement (22) et du bloc d'extension (23), ainsi que les canaux de guidage (201), (202) de la base (20), séparés par plusieurs interstices (24).

7. La structure de support composite variable permettant de maintenir un appareil électronique, tel que décrite au paragraphe 1, contient les rails (210), (212), (220), (221), (230), (231) du bloc de support (21), du bloc de connexion (22) et du bloc d'extension (23), séparés par des interstices (223).

8. La structure de support composite variable permettant de maintenir un appareil électronique, tel que décrite au paragraphe 1, contient les canaux de guidage (201), (202) de la base (20), dont les surfaces adjacentes présentent des particules ou des nervures.

9. La structure de support composite variable permettant de maintenir un appareil électronique, tel que décrite au paragraphe 1, contient les canaux (201), (202), (211), (222) de la base (20), le bloc de support (21) et le bloc de liaison (22), dont la largeur diminue progressivement de leur face intérieure et face extérieure ou augmente progressivement de leur face intérieure à leur face extérieure, et le bloc de support (21), le bloc de raccordement (22) et le bloc d'extension (23), dont la largeur diminue également progressivement de leur face intérieure et face extérieure ou augmente progressivement de leur face intérieure à leur face extérieure.
